Europäisches Patentamt

European Patent Office

Office européen des brevets

(19)

(11) Veröffentlichungsnummer: **0 102 400**
**B1**

(12) # EUROPÄISCHE PATENTSCHRIFT

(45) Veröffentlichungstag der Patentschrift:
14.01.87

(21) Anmeldenummer: 82107840.9

(22) Anmeldetag: 26.08.82

(51) Int. Cl.⁴: **B 29 C  47/36, B 29 C  47/76**

(54) Entgasungsextruder.

(43) Veröffentlichungstag der Anmeldung:
14.03.84 Patentblatt 84/11

(45) Bekanntmachung des Hinweises auf die Patenterteilung:
14.01.87 Patentblatt 87/3

(84) Benannte Vertragsstaaten:
DE FR GB IT NL SE

(56) Entgegenhaltungen:
EP-A-0 062 494
DE-A-2 417 116
DE-A-2 706 755
DE-A-2 931 387
DE-B-1 529 813
DE-B-2 217 413
DE-C-1 235 864
US-A-3 362 044
US-A-4 124 306
US-A-4 178 104

(73) Patentinhaber: HERMANN BERSTORFF
Maschinenbau GmbH, An der Breiten Wiese 3/5,
D-3000 Hannover 61 (DE)

(72) Erfinder: Anders, Dietmar, Ing. grad., Lauenburger
Hof 13, D-3000 Hannover 61 (DE)

EP 0 102 400 B1

LIBER, STOCKHOLM 1987

**Beschreibung**

Die Erfindung betrifft einen Entgasungsextruder für thermoplastische Kunststoffe und Kautschuk. Aus der US-PS 4,178,104 ist ein Stiftzylinder-Extruder bekannt mit Stiften, die durch den die Förderschnecke umgebenden Zylinder ragen. Die Förderstege sind an den Stellen, an denen die Stifte in den Zylinderraum ragen, radial unterbrochen.

Aus der EP-A- 0082494 die unter Artikel 54 (3) zu betrachten ist, ist ein Entgasungsextruder bekannt für thermoplastische Kunststoffe und Kautschuk mit einer Einzugs-, Stift-, Entgasungs- und Austragszone, mit in der Stiftzone angeordneten Gehäusestiften, wobei die Stiftzone mit den Gehäusestiften vor der Entgasungszone angeordnet ist, und wobei der Durchmesser "D" des Extruderzylinders in der Entgasungszone gegenüber dem Durchmesser "d" des Extruderzylinders in der Stiftzone erweitert ausgebildet ist.

Stiftzylinder-Extruder haben sich in der Praxis bewährt, weil damit erreicht wird, temperaturempfindliche Kautschuke und thermoplastische Kunststoffe sehr gut zu mischen und zu homogenisieren, ohne daß durch die Vermischung und Homogenisierung allzuviel Scherenergie, die zu einer schädlichen Erhöhung der Materialtemperatur führen würde, in das zu verarbeitende Material eingeleitet wird.

Insbesondere haben Stiftzylinder-Extruder jedoch den großen Vorteil, daß durch die in den Zylinderraum ragenden Stifte das Material am Mitdrehen mit der Schnecke gehindert und wodurch somit eine erhebliche Steigerung der Förderleistung erreicht wird. Die Steigerung der Förderleistung ist bei üblichen Extruder sehr vorteilhaft. Wenn jedoch ein zu entgasendes Material verarbeitet werden soll, muß in der Entgasungszone ein Druckabfall des Materials erreicht werden, um durch die Erhitzung des Materials entstandene Gase freizusetzen und aus einer Entgasungsöffnung abzuziehen. Allein um zu vermeiden, daß sich die Entgasungsöffnung mit plastisch gewordenem Material zusetzt, muß die Entgasungszone drucklos gehalten werden, d.h. sie darf nur teilweise mit Material gefüllt sein.

Hier liegt nun eine große Schwierigkeit. Auf der einen Seite wird durch den Einsatz des Stiftzylinders (der die oben erwähnten überragenden Vorteile hat) eine erhebliche Steigerung des Durchsatzes erreicht, auf der anderen Seite stört der gesteigerte Durchsatz in der Entgasungszone.

Ein weiteres Problem liegt darin, daß die im Stiftzylinderteil des Extruders erreichte, erhöhte Förderleistung im Austragsteil verkraftet werden muß. Übliche Auslegungen der Schneckengeometrie in der Austragszone reichen nicht aus, um die in der Stiftzylinderzone erreichte, verstärkte Förderleistung aufzunehmen und gegen den Widerstand eines Siebes und eines Spritzwerkzeuges zu fördern, ohne daß sich das Material bis in die Entgasungszone zurückstaut. Ein Ausweg für niedrige Werkzeugwiderstände bestünde darin, eine überlange Austragszone mit großer Gangtiefe vorzusehen. Durch diese Maßnahme wird jedoch der Extruderpreis überproportional gesteigert.

Es ist die Aufgabe der Erfindung, einen Entgasundsextruder in Verbindung mit einer Stiftzylinderzone vorzusehen, der auf der einen Seite trotz Erheblich gesteigerter Förderleistung eine Teilfüllung in der Entgasungszone sicherstellt und der auf der anderen Seite die durch die Stiftzylinderzone erreichte Steigerung der Materialförderung auch in der Austragszone aufnehmen und gegen den Widerstand von Spritzwerkzeugen fördern kann.

Die Aufgabe wird gelöst durch die im Anspruch 1 niedergelegten Merkmale.

Durch die Anordnung der Stiftzylinderzone unmittelbar von der Entgasungs- und Austragszone wird erreicht, daß die stark erhöhte Ausstoßleistung eines Stiftzylinderteiles auch für einen Entgasungsextruder ausgenutzt werden kann.

Da das zu entgasende Material, nachdem es den unmittelbar vor der Entgasungsöffnung angeordneten Blister mit einem erheblichen Druckabfall überströmt, völlig entspannt wird, erfolgt eine ausgezeichnete Entgasung.

Durch die Erweiterung des Zylinderdurchmessers in der Entgasungs- und Autragszone wird viel freier Raum geschaffen, der eine Voraussetzung für eine Oberflächenvergrößerung und Dünnschichtausstreichung des zu entgasenden Materials ist, wodurch Gasbläschen leicht aus der Masse entweichen können.

Insbesondere wird jedoch durch die Erweiterung des Zylinderdurchmessers erreicht, daß die Förderleistung des Austragsteiles erheblich gesteigert werden kann, und zwar in einem solchen Maß, um auf der einen Seite die gesteigerte Förderleistung des Stiftzylinderteiles aufzunehmen und um auf der anderen Seite immer soviel Material schnell aus der Entgasungszone wegzufördern, damit die Entgasungszone nie ganz mit Material gefüllt ist.

Eine komplette Füllung der Schneckengänge in der Entgasungszone würde die Entgasung des Materials sofort zusammenbrechen lassen und außerdem die Entgasungsöffnung verstopfen.

Ein zeitraubender Reinungsvorgang wäre unerläßlich.

Um also die äußerst vorteilhafte Förderungssteigerung einer Stiftzylinderzone bei einem Entgasungsextruder nutzen zu können, mußte eine weitere Maßnahme zur Erhöhung der Förderleistung der Austragszone hinzukommen.

Durch die erfindungsgemäße Lehre, nämlich die Erweiterung des Zylinderdurchmessers in der Austragszone, wird dieses Ziel in überraschender Weise ausgezeichnet gelöst.

Dabei ist noch besonders vorteilhaft, daß das Austragsteil sehr kurz ausgebildet sein kann, wodurch der Extruder sehr preiswert ist.

Die kurze Baulänge bietet in technologischer Hinsicht darüber hinaus den großen Vorteil einer kurzen Verweilzeit des Materials, d.h. das Material wird thermisch nur gering belastet.

In Weiterbildung der Erfindung ist der Zylinderdurchmesser in der Entgasungs- und Austragszone um 10 - 30 % gegenüber dem Zylinderdurchmesser in der Stiftzylinderzone erweitert.

Gute Ergebnisse wurden erzielt bei einer 15 - 25 %igen Erweiterung des Zylinderdurchmessers der Entgasungs- und Austragszone, hervorragende Ergebnisse wurden jedoch bei einer um etwa 20 %igen Erweiterung erreicht.

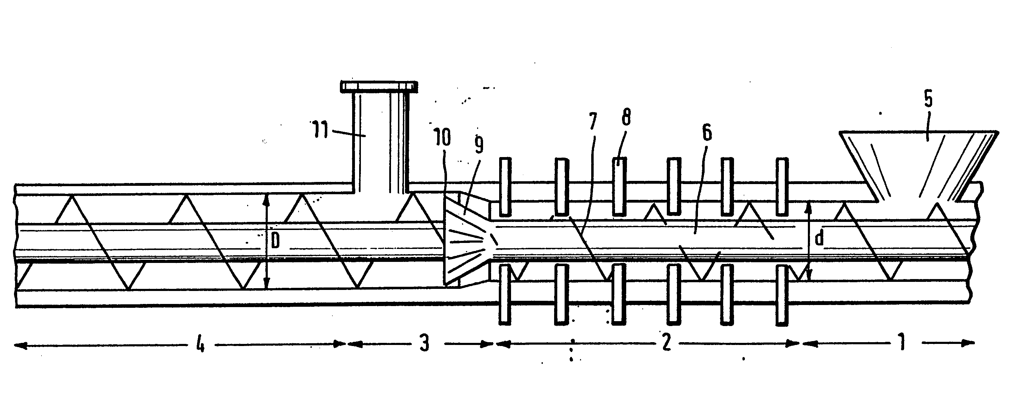

Ein Ausführungsbeispiel der Erfindung wird in der Zeichnung dargestellt.

Der gezeigte Entgasungsextruder besteht aus vier Zonen, nämlich
der Einzugszone 1,
der Stiftzone 2,
der Entgasungszone 3 und
der Austragszone 4.
Einzugszone 1 weist einen Materialaufgabetrichter 5 auf.

Schnecke 6 ist in diesem Beispiel mit einem durchgehenden, gleichmäßig dicken Kern ausgebildet, auf dem wendelförmige Förderstege 7 angeordnet sind.

Im Stiftzylinderteil ragen Stifte jeweils radial und in gleichmäßigen Abständen umfangsmäßig um die Schnecke in den Zylinderraum und sind jeweils zu Stiftebenen 8 zusammengefaßt. Die Förderstege 7 sind radial an den Stellen abgefräst, an denen die Stifte 8 in den Zylinderraum ragen.

Entgasungszone 3 beginnt mit einem Blister 9, der die Stift zone 2 von der Entgasungszone 3 unter Belassung eines Ringspaltes 10 trennt. An Entgasungsöffnung 11 wird ein Unterdrucksystem angeschlossen, um freigesetzte gasförmige Bestandteile aus dem in Schmelzeform vorliegenden Material abzuziehen.

Der Zylinderdurchmesser "D" in der Entgasungs- und Austragszone ist gegenüber dem Durchmesser "d" in der Stiftzylinderzone um etwa 20 % erweitert. Bei gleichbleibendem Kerndurchmesser der Schnecke 6 steht also sehr viel mehr Volumen und Förderleistung zur Verfügung, wodurch erstmalig eine Stiftzylinderzone bei einem sehr gut funktionierenden Entgasungsextruder eingesetzt werden kann.

Ein Entgasungsextruder mit dem hervorragende Ergebnisse erzielt werden, wies folgende Daten auf:
1 Schnecken- bzw. Zylinderdurchmesser "d" in der Einzugs- und Stiftzone 200 mm,
2. Schnecken- bzw. Zylinderdurchmesser "D" in der Entgasungs- und Austragszone 250 mm,
3. Schneckenlänge in der Einzugszone 3 D (D = Schneckendurchmesser),
4. Schneckenlänge in der Stiftzone 7,5 D,
5. Schneckenlänge in der Entgasungszone 2 D,
6. Schneckenlänge in der Austragszone 4 D,
7. 1.800 kg/h Ausstoß bei 20 Umdrehungen pro Minute,
8. Austragsteilgegendruck 150 bar (Werkzeugdruck).

Bei einem Entgasungsextruder gemäß der eingangs genannten US-A-4178104 mit einem durchgehenden Zylinderdurchmesser von 200 mm konnte, ohne daß sich Material in die Entgasungszone zurückstaute (wodurch jegliche Entgasung unmöglich werden würde), nur ein Werkzeugdruck von 20 bis max. 50 bar aufgebaut werden.

Um mit einem solchen 200 mm-Entgasungsextruder einen Werkzeugdruck (Profilkopf zum Spritzen einer Gummibahn) von nur 100 bar aufzubauen, ohne daß sich das Material in die Entgasungszone zurückstaute, mußte die Ausstoßleistung auf 1.000 - 1.200 kg/h reduziert werden. Selbst durch eine unrealistische Verlängerung der Austragszone und Optimierung der Schneckengeometrie ließ sich dieses Ergebnis nicht verbessern.

Erst durch die erfindungsgemäße Gestaltung der Entgasungs- und Austragszone konnte die vorteilhafte Steigerung des Ausstoßes einer Stiftzone bei einem Entgasungsextruder voll nutzbar gemacht werden. Bezugszeichenliste
1 = Einzugszone
2 = Stiftzone
3 = Entgasungszone
4 = Austragszone
5 = Materialaufgabetrichter
6 = Schnecke
7 = wendelförmige Förderstege
8 = Stifte
9 = Blister
10 = Ringspalt
11 = Entgasungsöffnung
D = Zylinderdurchmesser in der Entgasungs- und Austragszone
d = Zylinderdurchmesser in der Stiftzylinderzone

## Patentansprüche

1. Entgasungsextruder für thermoplastische Kunststoffe und Kautschuk mit einer Einzugs-, Stift-, Entgasungs- und Austragszone, mit in der Stiftzone angeordneten Gehäusestiften, wobei
die Stiftzone (2) mit den Gehäusestiften (8) vor der Entgasungszone (3) angeordnet ist, wobei
der Durchmesser "D" des Extruderzylinders in der Entgasungszone (3) gegenüber dem Durchmesser "d" des Extruderzylinders in der Stiftzone (2) erweitert ausgebildet ist, und wobei
der Durchmeiser "D" des Extruderzylinders in der Austragszone (4) gegenüber dem Durchmesser "d" des Extruderzylinders in der Stiftzone (2) ebenfalls erweitest ausgebildet ist.

2. Entgasungsextruder nach Anspruch 1, dadurch gekennzeichnet,
daß der Durchmesser des Extruderzylinders in der Entgasungs- und Austragszone (3, 4) gegenüber dem Zylinderdurchmesser in der Stiftzone (2) um 10 - 30 %, vorzugsweise um 15 - 25 %, insbesondere um ca. 20 %, erweitert ausgebildet ist.

## Claims

1. Degassing extrusion device for thermoplastic materials and rubber, comprising a feed region, a pin region, a degassing region and a discharge region, with housing pins disposed in the pin region, wherein the pin region (2) having the housing pins (8) is upstream of the degassing region (3), wherein the diameter "D" of the extrusion cylinder in the degassing region (3) exceeds the diameter "d" of the extrusion cylinder in the pin region (2), and wherein the diameter "D" of the extrusion cylinder in the discharge region (4) also exceeds the diameter "d" of the extrusion cylinder in the pin region (2).

2. Degassing extrusion device according to claim 1, characterised in that the diameter of the extrusion cylinder in the degassing and discharge regions (3,4) exceeds the cylinder diameter in the pin region (2) by 10 - 30%, preferably by 15 - 25%, more especially by about 20%.

## Revendications

1. Extrudeuse à dégazage pour des matières plastiques thermoplastiques et pour du caoutchouc, comprenant une zone d'introduction, une zone à broches, une zone de dégazage et une zone d'évacuation avec des broches d'enveloppe disposées dans la zone à broches, la zone à broches (2) avec les broches d'enveloppe (8) étant disposée en amont de la zone de dégazage (3), le diamètre "D" du fourreau de l'extrudeuse dans la zone de dégazage (3) étant élargie par rapport au diamètre "d" du fourreau de l'extrudeuse dans la zone à broches (2) et le diamètre "D" du fourreau de l'extrudeuse dans la zone d'évacuation (4) étant également élargie par rapport au diamètre "d" du fourreau de l'extrudeuse dans la zone à broches (2).

2. Extrudeuse à dégazage selon la revendication 1, caractérisée en ce que le diamètre du fourreau de l'extrudeuse dans les zones de dégazage (3) et d'évacuation (4) est élargi par rapport au diamètre du fourreau dans la zone à broches (2), de 10 à 30 % de préférence de 15 à 25 %, et notamment de 20 % environ.